# FASCICULE DE BREVET EUROPEEN

(11) **EP 0 468 893 B1**
(45) Date de publication et mention de la délivrance du brevet: **22.02.1995**
(21) Numéro de dépôt: 91402089.6
(22) Date de dépôt: 25.07.1991
(51) Int. Cl.: B29C 37/00, B29C 45/00, B29C 45/14, A01J 25/16

(54) **Pièce en matière plastique armée, son procédé de fabrication et utilisation de cette pièce en tant que plateau-support de fromage en cours de maturation**
Verfahren zur Herstellung eines Formteils aus Kunststoff mit festen Einlagen und Verwendung desselben als Trageplatte beim Reifen von Käse
Process for the manufacture of a reinforced plastic component, and use thereof as support for ripening cheese

(30) Priorité: 26.07.1990 FR 9009573; 13.11.1990 FR 9014060
(43) Date de publication de la demande: 29.01.1992
(73) Titulaire: ALLIBERT EQUIPEMENT, F-92748 Nanterre Cedex (FR)
(72) Inventeur: Hemery, André, F-27700 Les Andelys (FR)
(74) Mandataire: Lerner, François

(56) Documents cités:
- EP-A- 0 109 995
- DE-U- 1 795 026
- FR-A- 957 422
- GB-A- 1 446 969
- GB-A- 2 097 713
- US-A- 4 071 938

## Description

L'invention concerne tout d'abord un procédé de fabrication par moulage, dans une empreinte de moule, d'une pièce comprenant une paroi en matière plastique reliée à une couche également en matière plastique venant enrober une armature mécaniquement résistante. L'invention concerne également la pièce en elle-même.

Pratiquement l'ensemble des fabricants de pièces plastiques, par exemple en polypropylène, sont aujourd'hui confrontés à des problèmes de criques ou de vrillage des pièces lorsque celles-ci sont renforcées d'une armature (en général métallique), le retrait naturel de la matière plastique créant des efforts de contraction délicats à contrôler et souvent dommageables pour les pièces voir par exemple FR-A-957 422.

L'invention a pour objet d'apporter une solution à ces problèmes, notamment dans le cas où les pièces se présentent sous la forme d'un plateau présentant une paroi centrale en matière plastique avec un cadre métallique périphérique enrobé de matière plastique.

A cet effet, le procédé de moulage objet de l'invention se caractérise en particulier en ce que dans lequel procédé :
a) on place l'armature de raidissement dans le moule, on remplit l'empreinte du moule avec de la matière plastique fluide reliant, par au moins un pont, la matière des cavités de moule correspondant à la paroi de la pièce et à ladite couche d'enrobage, respectivement, le pont étant conformé avant rétraction de la matière plastique pour y ménager une réserve de longueur formant une marge prédéterminée de déformation utilisable lors du retrait,
b) et ensuite, on ouvre le moule et démoule la pièce avant la fin du retrait intervenant lors de la solidification de la matière plastique pour laisser les ponts de déformer en suivant la rétraction de cette matière.

Ainsi, on pourra contrôler le retrait de la matière plastique lors de sa solidification en concentrant une partie importante des efforts de contraction à l'endroit du (des) pont(s) de liaison en question, la déformation, avec par exemple articulation en rotation de ce(s) dernier(s), limitant largement les problèmes de vrillage ainsi que l'apparition des criques.

De préférence, selon une autre caractéristique de l'invention, ladite paroi étant réalisée pour être sensiblement plane, on ajustera avantageusement d'origine, avant que la matière plastique ne se rétracte, la marge de déformation du (des) pont(s) pour conserver après retrait sa planéité à la paroi.

Quant à la pièce en elle-même finalement obtenue conformément à l'invention, différentes formes de réalisation peuvent être envisagées.

Dans une première variante, la pièce pourra se présenter sous la forme générale d'un plateau comprenant en partie centrale une paroi sensiblement plane en matière plastique reliée périphériquement, par plusieurs desdits ponts précités, à une couche de matière plastique venant enrober une armature formant un cadre autour de ladite paroi, les ponts qui forment une seule pièce avec la matière de cette paroi et de ladite couche présentant au moins une gorge ménagée à l'endroit de la jonction entre ladite paroi et ces ponts et/ou entre ces dernières et ladite couche d'enrobage.

Dans une autre variante de cette même pièce, chaque pont de matière pourra être incliné angulairement (sensiblement dans le même plan que la paroi centrale) par rapport à l'une des directions rayonnantes passant par le centre de la paroi et intersectant le pont considéré.

Selon une troisième variante, que l'on pourrait associer à la seconde, lesdits ponts de liaison pourraient présenter une forme sinueuse, ceci toujours sensiblement dans le plan de la paroi centrale.

Enfin, l'invention se rapporte à l'utilisation d'une telle pièce armée à retrait contrôlé pour obtenir un plateau-support de fromage lourd, en cours de maturation, tel que de l'emmenthal.

L'invention, ses caractéristiques et avantages apparaîtront encore plus clairement de la description qui va suivre faite en référence aux dessins d'accompagnement donnés uniquement à titre d'exemples non limitatifs et dans lesquels :
- la figure 1 montre une vue de face d'une pièce présentant les caractéristiques de l'invention,
- la figure 2 est une demi-coupe agrandie de la pièce de la figure 1 dans le sens de la ligne II-II de cette même figure 1,
- les figures 3 et 4 illustrent également, en demi-vue de coupe identiques à celle de la figure 2, deux étapes successives de réalisation de la pièce de la figure 1,
- la figure 5 est une vue schématique d'ensemble d'une variante de réalisation de la pièce de la figure 1,
- la figure 6 est une vue agrandie d'un détail de réalisation du plateau de la figure 5,
- la figure 7 est une vue en coupe selon la ligne VII-VII de la figure 6,
- et les figures 8 et 9 montrent la configuration de quelques languettes de liaison au moment du moulage alors que la matière plastique est encore fluide (figure 8) et après solidification et retrait de cette même matière (figure 9).

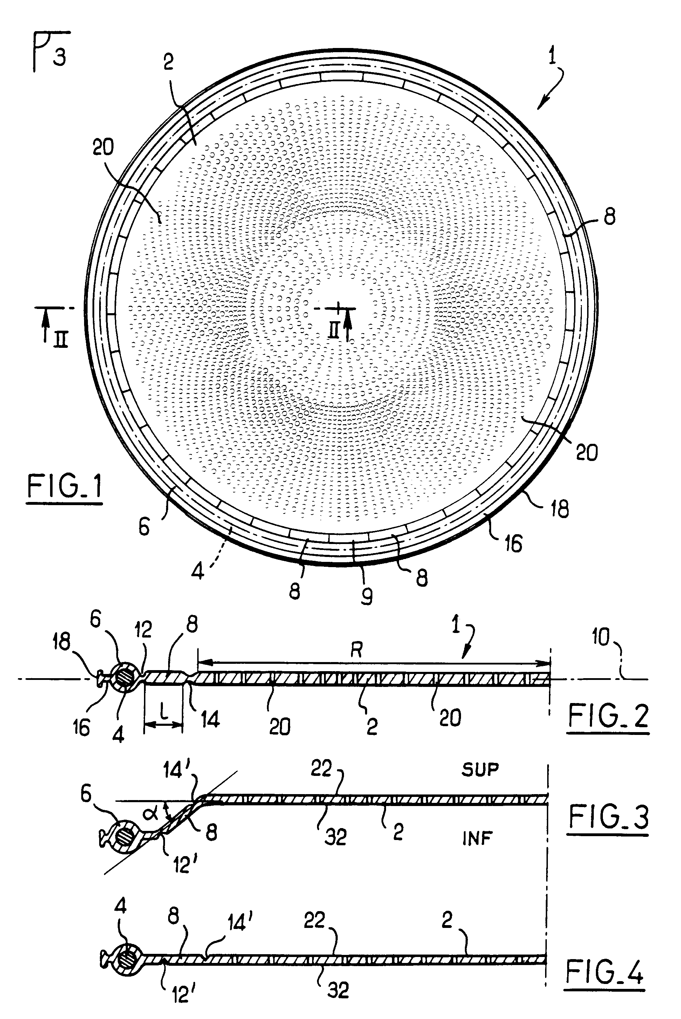

Sur les figures 1 et 2 tout d'abord, on a représenté un plateau par exemple destiné à recevoir en appui sur lui un fromage relativement lourd et volumineux, tel que de l'Emmenthal en cours de maturation.

Le plateau 1 comprend une paroi centrale 2 sensiblement plane en matière plastique (telle par exemple du polypropylène), entourée en l'espèce sur toute sa périphérie par une armature 4 de renfort ou de rigidification, telle qu'un cadre métallique à section sensiblement circulaire.

Pour sa protection et sa liaison avec la paroi 2, l'armature 4 est enrobée d'une couche 6 de la même matière plastique que celle de la paroi 2 et est reliée à cette dernière, en une seule pièce, par une série de ponts de matière 8. Chaque pont est séparé du suivant par une ouverture 9.

Sur la figure 1, on remarquera que compte-tenu de la forme en plateau circulaire de la pièce 1, tous les ponts 8 sont identiques et sensiblement régulièrement répartis radialement sur tout le pourtour de la paroi 2 dans le plan général 3 de laquelle ils s'étendent, la pièce 1 ayant été représentée sur les figures dans son état "prêt à l'emploi", c'est-à-dire après retrait de la matière plastique.

Sur la figure 2, on a repéré 10 l'axe sensiblement commun de la pièce 2 et d'un pont 8.

Sur les figures, il apparaît en outre clairement que dans une direction radiale, la longueur radiale l des ponts est très nettement inférieure au rayon R de la paroi centrale 2. A titre d'exemple, on peut notamment envisager un rapport de l'ordre de 1 à 20.

A ses extrémités radiales, chaque pont présente des gorges transversales de moindre épaisseur 12, 14. Ces gorges 12, 14 ont en particulier pour rôle de servir de zones privilégiées d'articulation en rotation des ponts, lors du retrait, ceci dans une succession de plans radiaux sensiblement perpendiculaires à celui de la paroi 2, permettant ainsi un déplacement relatif en longueur de cette paroi et de l'armature 4.

En concentrant ainsi une partie importante des efforts naturels de contraction de la matière à l'endroit des ponts 8 qui vont se déformer de façon contrôlée ou dirigée sous la tension de cette matière, on va pouvoir absorber, selon les essais effectués, entre 40 et 70 % environ du retrait, ceci de façon régulière et équilibrée sur tout le pourtour de la pièce.

Sur la figure 2 en particulier, on remarquera qu'il pourra être prévu, pour rigidifier encore extérieurement la pièce, de prolonger la couche 6 d'enrobage du côté opposé aux ponts 8, par une nervure axiale périphérique 16 pouvant être entourée d'une nervure transversale 18.

Etant donné que le plateau illustré sur les figures est en particulier destiné à être utilisé en tant que plateau support de fromage, on a jugé préférable de ménager dans la paroi 2, d'endroits en endroits, des moyens 20 de circulation d'air formés en creux dans cette paroi.

Comme on le voit plus clairement sur la figure 2, ces moyens d'aération pourront consister en des orifices traversant la paroi 2.

La répartition de ces orifices sera fonction du niveau d'aération désiré, l'aspect relatif à la tenue mécanique de la paroi devant bien entendu être également pris en considération.

Eventuellement, d'autres moyens de circulation d'air pourraient être envisagés, tels que par exemple des gorges ou des cannelures.

A partir des figures 3 et 4, on va maintenant présenter brièvement un procédé de fabrication pouvant être mis en oeuvre pour réaliser le type de pièce qui vient d'être décrit.

Sur la figure 3 tout d'abord, on peut voir que le plateau 1 a été représenté tel qu'il se trouve à l'intérieur du moule utilisé pour sa fabrication (non illustré) lorsque l'on vient couler ou d'injecter la matière plastique, après avoir bien entendu pris soin de placer correctement dans le moule l'armature de raidissement 4.

Dans cette première phase de fabrication, on va ainsi remplir de matière plastique (liquide ou souple à sa température de mise en oeuvre) l'empreinte du moule alors fermé pour réaliser en une seule pièce, la paroi 2, la couche 6 d'enrobage de l'armature et son court prolongement intérieur la reliant à la série de liaisons 8 avec leur(s) gorge(s) 12, 14.

Pour réserver à l'endroit de ces liaisons 8 une marge de déformation utilisable lors du retrait, on a ici choisi de réaliser les bandes 8 en leur donnant d'origine, alors que la matière plastique est encore fluide dans le moule, un angle d'inclinaison α par rapport à la surface générale de la paroi 2, décalant ainsi celle-ci par rapport à son armature périphérique (voir figure 3).

Le moule est alors bien entendu fermé.

Par contre, dès cette opération terminée et surtout avant que la matière plastique ne se solidifie en se contractant, on va ouvrir le moule et de préférence démouler la pièce pour laisser se déformer librement les liaisons 8.

On constate alors progressivement un alignement de la paroi 2 et de son armature (voir figure 4), l'angle α initial ayant tendance à diminuer au fur et à mesure du retrait.

Comme on le voit clairement sur la figure 4, on va ainsi pouvoir obtenir, en fin de retrait, une pièce sensiblement plane sous tension raisonnable, l'angle d'inclinaison d'origine ayant pratiquement disparu.

On comprendra que cet angle initial variera notamment en fonction de la matière plastique utilisée et de la dimension de la pièce à fabriquer. Un angle compris entre 30 et 60° devrait convenir.

En pratique, on conseillera d'ajuster cet angle d'origine, pour obtenir après retrait un compromis entre la planéité sous charge de la paroi du plateau et l'effort de tension alors exercé essentiellement sur l'armature.

Sur les figures 3 et 4, on remarquera qu'à la différence des figures 1 et 2 où les zones de moindre épaisseur 12, 14 ont été formées par un retrécissement sensiblement symétrique de matière sur les deux faces opposés de la pièce, les charnières 12′ et 14′ de chaque languette ont été réalisées respectivement sur une face et sur l'autre de la pièce, en fonction du sens de rotation retenu.

Plus précisément, dans cet exemple, la première charnière 12′ entre la paroi 2 et la bande de liaison considérée a été formée du côté de la face "supérieure" 22 de la pièce, la seconde charnière opposée 14′ ayant ici été formée sur la face "inférieure" 32. Par souci de clarté, on a indiqué par les termes SUP et INF les côtés choisis arbitrairement sur la figure 3 comme supérieur et inférieur.

Bien entendu, toutes les solutions intermédiaires pourraient être envisagées, comme par exemple celles prévoyant une charnière unique ou une double charnière formée sur une même face aux deux extrémités de chaque languette 8.

Il doit être également tout à fait clair que de nombreuse variantes de réalisation d'une pièce conforme à l'invention pourraient être imaginées. En particulier, on pourrait prévoir de relier la paroi 2 et la couche 6 reliée à l'enrobage de l'armature par une bande formant un pont continu de matière, pouvant si nécessaire présenter une épaisseur inférieure à celle de la paroi 2. On pourrait également imaginer de réaliser des plateaux rectangulaires ou de toute autre forme.

L'invention pourrait également être appliquée à la réalisation d'une paroi quine serait reliée que sur l'un de ses bords de côté à une armature de raidissement enrobée, ceci par une bande déformable qui serait soit continue, soit discontinue avec des ouvertures d'espacement.

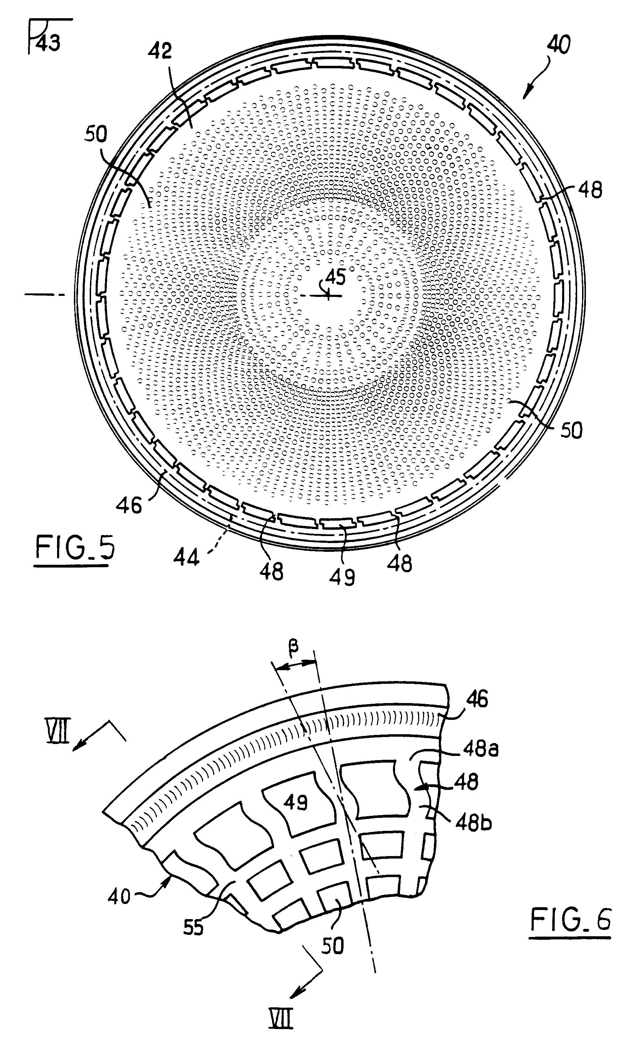

Sur les figures 5 à 9, on a d'ailleurs illustré une variante de réalisation de l'invention où l'on retrouve notamment (voir figure 5) un plateau 40 à panneau central 42 sensiblement plan en matière plastique entouré périphériquement par une armature 44, laquelle est enrobée d'une couche 46 de la même matière plastique que celle du panneau, de fines languettes 48 séparées par des interstices 49 assurant la liaison en s'étendant sensiblement dans le plan 43 du panneau.

Pour assurer la réserve ou marge de longueur utilisable lors du retrait, les languettes 48 pourront présenter d'origine une sinuosité par exemple en "S" formée dans le plan 43.

Dans le même but, chaque languette, qui présente ici une forme allongée sensiblement en barreau, pourra être orientée dans le sens de sa longueur avec une inclinaison angulaire β (figure 2) par rapport à la direction rayonnante correspondante 41 passant par le centre 45 du plateau (figure 5).

En pratique, une forme sinueuse pourra être préférée à une forme rectiligne en biais dans la mesure où elle permet des raccordements radiaux d'extrémité de languettes 48a, 48b s'étendant dans la direction des axes rayonnants correspondants.

Concernant les ouvertures 50 d'aération du panneau 42, on remarquera qu'en l'espèce, elles se présentent sous une forme rectangulaire, donnant au plateau l'aspect d'un treillis dont les branches les plus extérieures périphériquement, repérées 55 sur la figure 6, pourront venir directement dans le prolongement des extrémités de raccordement en regard 48b des languettes 48.

En ce qui concerne le procédé de fabrication de ce plateau 40, on notera simplement que d'origine, lors du moulage de la pièce et alors que la matière plastique est encore souple, c'est-à-dire avant retrait, on conformera à l'intérieur du moule les languettes 48 dans le plan général du plateau avec avantageusement un décalage angulaire β assez prononcé (par exemple de l'ordre de 15 à 25°) de manière à disposer sur toute la zone périphérique du panneau, d'une zone de déformation présentant cette réserve de longueur ou marge de déformation qui va pouvoir être absorbée lors du retrait en particulier du panneau 42, au moment où la matière plastique va se solidifier.

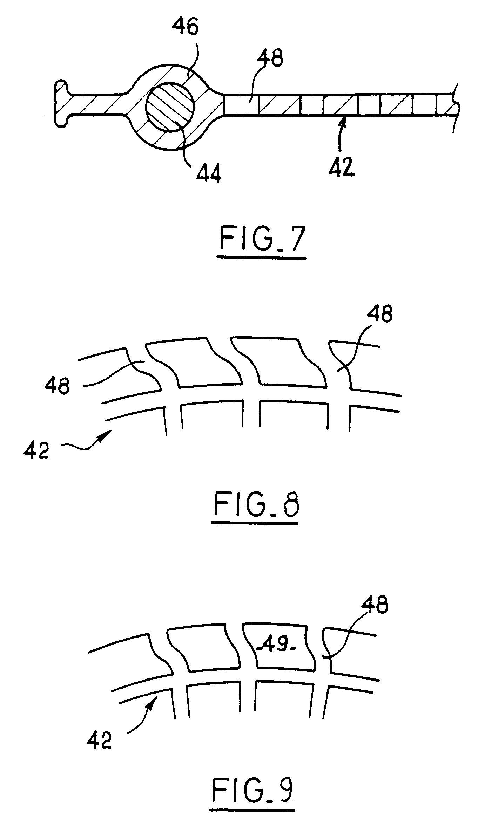

Bien entendu, à ce moment, il faudra que les languettes 8 puissent alors librement se déformer et ainsi passer de leur forme de la figure 8 à celle de la figure 9 où l'on constate une sinuosité moins marquée correspondant à une contraction de la paroi 42 notamment.

Dans la pratique, le nombre, la longueur et l'orientation angulaire β des languettes seront adaptés pour assurer un compromis entre la planéité sous charge du panneau et les efforts de tension exercés en particulier sur l'armature.

## Revendications

1. Procédé de moulage dans une empreinte de moule, d'une pièce comprenant une paroi (2, 42) en matière plastique reliée à une couche (6, 46) de matière plastique enrobant une armature (4, 44), dans lequel procédé :
a) on place l'armature de raidissement dans le moule, on remplit l'empreinte du moule avec de la matière plastique fluide reliant, par au moins un pont (8, 48), la matière des cavités de moule correspondant à la paroi de la pièce et à ladite couche d'enrobage, respectivement, le pont étant conformé avant rétraction de la matière plastique pour y ménager une réserve de longueur formant une marge prédéterminée de déformation utilisable lors du retrait,
b) et ensuite, on ouvre le moule et démoule la pièce avant la fin du retrait intervenant lors de la solidification de la matière plastique, pour laisser les ponts se déformer en suivant la rétraction de cette matière.

2. Procédé selon la revendication 1,
caractérisé en ce que :
- lors de l'étape a), on réalise le(s) pont(s) (8) de liaison pour qu'il(s) présente(nt), avant que la matière plastique ne se rétracte, une inclinaison (α) par rapport à ladite paroi (2) de la pièce et comporte(nt) au moins une charnière (12, 14, 12', 14') d'articulation en rotation par rapport à cette paroi (2) et/ou par rapport à la couche (6) d'enrobage de l'armature,
- puis, lors de l'étape b) on laisse la matière se contracter pour que ce retrait entraîne une diminution de l'inclinaison du (des) pont(s) par rapport à ladite paroi (2), avec pivotement à l'endroit de la (des) charnière(s).

3. Procédé selon la revendication 1,
caractérisé en ce que :
- lors de l'étape a), on réalise de façon sensiblement plane ladite paroi (42) de la pièce et on forme dans ce plan le (s) pont(s) de liaison,
- puis, lors de l'étape b), on laisse se déformer le(s)dit(s) pont(s) (48) dans le plan général (43) de la paroi.

4. Procédé selon la revendication 3,
caractérisé en ce que lors de l'étape a), on forme le(s) pont(s) (48) pour qu'il(s) présente(nt) une sinuosité marquée.

5. Procédé selon la revendication 1,
caractérisé en ce que ladite paroi (2, 42) étant réalisée pour être sensiblement plane, on ajuste d'origine, avant que la matière plastique ne se rétracte, la marge de déformation du (des) pont(s) (8, 48) pour conserver après retrait sa planéité à ladite paroi.

6. Pièce obtenue par la mise en oeuvre du procédé selon l'une quelconque des revendications 1, 2, ou 5, caractérisée en ce qu'elle se présente sous la forme générale d'un plateau comprenant en partie centrale une paroi (2) sensiblement plane en matière plastique reliée périphériquement par des ponts de matière (8) à une couche (6) de matière plastique venant enrober une armature (4) formant un cadre autour de ladite paroi (2), lesdits ponts (8) qui forment une seule pièce avec la matière de cette paroi et de ladite couche (6) présentant au moins une gorge (12, 14 ; 12', 14') ménagée à l'endroit de la jonction entre ladite paroi (2) et ces ponts et/ou entre ces derniers et ladite couche (6) d'enrobage.

7. Pièce selon la revendication 6,
caractérisée en ce qu'elle présente deux faces opposées (22, 32) ainsi que deux dites gorges (12, 14 ; 12', 14') pour chaque pont, les gorges s'ouvrant sur une face et sur l'autre de la pièce.

8. Pièce obtenue par la mise en oeuvre du procédé selon l'une quelconque des revendications 1, ou 3 à 5, caractérisée en ce qu'elle se présente sous la forme générale d'un plateau comprenant en partie centrale une paroi (42) sensiblement en matière plastique reliée périphériquement par des ponts de matière (48) à une couche (46) de matière plastique venant enrober une armature (44) formant un cadre autour de ladite paroi (42), chaque pont qui forme une seule pièce avec la matière de ladite paroi (42) et de ladite couche (46) étant orienté dans le plan général (43) de la paroi (42) avec une inclinaison angulaire (β) par rapport à l'une des directions rayonnantes passant par le centre de cette paroi et croisant le pont correspondant.

9. Pièce obtenue par la mise en oeuvre du procédé selon l'une quelconque des revendications 1 ou 3 à 5, caractérisée en ce qu'elle se présente sous la forme générale d'un plateau comprenant en partie centrale une paroi (42) sensiblement plane en matière plastique reliée périphériquement par des ponts de matière (48) à une couche (46) de matière plastique venant enrober une armature (44) formant un cadre autour de ladite paroi (42), lesdits ponts (48) qui forment une seule pièce avec la matière de la paroi (42) et de ladite couche (46) présentant une forme sinueuse sensiblement dans le plan général (43) de cette paroi.

10. Pièce selon l'une quelconque des revendications 6 à 9, caractérisée en ce que lesdits ponts consistent en des languettes séparées par des ouvertures (9, 49) et réparties sensiblement régulièrement les unes à la suite des autres sur le pourtour de la paroi centrale (2, 42).

11. Utilisation de la pièce selon l'une quelconque des revendications 6 à 10 en tant que plateau-support à fromage, tel que de l'emmenthal en cours de maturation.

## Claims

1. Method of moulding, in a mould hollow, a piece comprising a wall (2, 42) of plastics material connected to a plastics material covering (6, 46), encasing a reinforcement member (4, 44), in which method:
a) the stiffening reinforcement member is placed in the mould, the hollow of the mould is filled with plastics material fluid connecting, by at least one bridge, (8, 48), the material of the cavities of the mould corresponding to the wall of the piece and to said encasing covering respectively, the bridge being formed before the plastics material is shrunk so as to provide it with a reserve of length forming a predetermined deformation margin which can be used during the shrinkage;
b) and, subsequently, the mould is opened and the piece is ejected before the end of the shrinking occurring during the setting of the plastics material, to allow the bridges to deform according to the shrinkage of this material.

2. Method according to Claim 1,
characterised in that:
- during stage a), the connecting bridge(s) (8) are produced so that it has/they have, before the plastics material shrinks, an inclination (α) in relation to said wall (2) of the piece and comprise(s) at least one articulation hinge (12, 14, 12', 14') which pivots in relation to this wall (2) and/or in relation to the covering (6) encasing the reinforcement;
- then, in stage b), the material is allowed to contract, so that this shrinkage causes a reduction in the angle of inclination of the bridge(s) in relation to said wall (2), with a pivoting at the location of the hinge(s).

3. Process according to Claim 1,
characterised in that:
- during stage a), said wall (42) of the piece is produced in a substantially flat manner and the connection bridge(s) are formed in this plane; and
- then, during stage b), said bridge(s) (48) are allowed to deform in the general plane (43) of the wall.

4. Method according to Claim 3,
characterised in that during stage a), the bridge(s) (48) is/are formed such that it has/they have a marked winding.

5. Method according to Claim 1,
characterised in that, said wall (2, 42) being produced so as to be substantially flat, the deformation margin of the bridge(s) (8, 48) is adjusted at the start, before the plastic material shrinks, so that the flatness of said wall is retained after shrinking.

6. Piece obtained by performing the method according to any one of Claims 1, 2 or 5, characterised in that it is in the general shape of a plate, comprising, in the central part, a plastics material wall (2) which is substantially flat, connected at the periphery by bridges of the material (8) to a plastics material covering (6) which encases a reinforcement member (4) forming a frame about said wall (2), said bridges (8), which form a single piece with the material of this wall, and said covering (6) having at least one throat (12, 14; 12', 14') provided at the point of the connection between said wall (2) and said bridges and/or between these latter and said surrounding coverings (6).

7. Piece according to Claim 6, characterised in that it has two opposite faces (22, 32) as well as two said throats (12, 14; 12', 14') for each bridge, the throats opening on both faces of the piece.

8. Piece obtained by performing the method according to any one of Claims 1 or 3 to 5, characterised in that it is in the general form of a plate comprising, in the central part, a wall (42) which is substantially of plastics material, connected at the periphery by bridges of the material (48) to a covering (46) of plastics material which encases a reinforcement member (44) forming a frame about said wall (42), each bridge, which forms a single piece with the material of said wall (42) and said layer (46), being directed in the general plane (43) of the wall (42) with an angular inclination (β) in relation to one of the radial directions passing through the centre of this wall and crossing the corresponding bridge.

9. Piece obtained by performing the process according to any one of Claims 1 or 3 to 5, characterised in that it is in the general shape of a plate comprising, in the central part, a substantially flat wall (42) of plastics material connected at the periphery by bridges of the material (48) to a plastics material covering (46) which encases a reinforcement member (44) forming a frame about said wall (42), said bridges (48), which form a single piece with the material of the wall (42) and of said layer (46), having a winding shape substantially in the general plane (43) of this wall.

10. Piece according to any one of Claims 6 to 9, characterised in that said bridges consist of tongues separated by apertures (9, 49) and distributed substantially regularly one after another on the circumference of the central wall (2, 42).

11. Application of the piece according to any one of Claims 6 to 10 as a supporting plate for cheese, such as emmantal, while it is maturing.

## Patentansprüche

1. Verfahren zum Formen in einem Formhohlraum eines Formbauteils, das eine Wand (2, 42) aus plastischem Material, verbunden mit einer Schicht (6, 46) plastischen Materials umfaßt, die eine Bewehrung (4, 44) umhüllt, Verfahren bei dem:
a) man die Versteifungsbewehrung in die Form einsetzt, man den Formhohlraum mit plastischem fluiden Material füllt, der über wenigstens eine Brücke (8, 48) das Material der Formhohlräume entsprechend der Wandung des Formteils und dieser Hüllschicht jeweils verbindet, wobei die Brücke vor dem Schwinden des plastischen Materials ausgeformt wird, um hierin eine Längenreserve vorzusehen, die einen bestimmten Verformungsspielraum, der beim Schwinden nützlich ist, bildet,
b) und man dann die Form öffnet und das Formteil vor der Beendigung des Schwindens, das bei der Verfestigung des plastischen Materials eintritt, entformt, damit die Brücken sich verformen können, während sie dem Schwinden dieses Materials folgen.

2. Verfahren nach Anspruch 1, dadurch **gekennzeichnet**, daß während der Stufe a) man die Verbindungsbrücke(n) (8) realisiert, damit diese sich, noch bevor das plastische Material sich zurückzieht und schwindet, eine Neigung (α) gegenüber dieser Wand (2) des Teils bildet bzw. bilden und wenigstens ein Scharnier (12, 14, 12', 14') bezogen auf diese Wand (2) und/oder bezogen auf die Hüllschicht (6) der Bewehrung umfaßt, bzw. umfassen,
- dann während der Stufe b) läßt man das Material sich zusammen ziehen, damit dieses Schwinden eine Verminderung der Neigung der Brücke(n) bezogen auf diese Wandung (2) mit Verschwenken am Ort dieses bzw. dieser Scharniere mit sich bringt.

3. Verfahren nach Anspruch 1, dadurch **gekennzeichnet**, daß während der Stufe a) man im wesentlichen diese Wand (42) des Formteils plan herstellt und man in dieser Ebene die die Verbindungsbrücke(n) formt, dann
- während der Stufe b) läßt man diese Brücke(n) (48) sich in der allgemeinen Ebene (43) der Wand verformen.

4. Verfahren nach Anspruch 3, dadurch **gekennzeichnet**, daß während der Stufe a) man die Brücke(n) (48) formt, damit sie eine merkliche Krümmung aufweist bzw. aufweisen.

5. Verfahren nach Anspruch 1, dadurch **gekennzeichnet**, daß diese Wandung (2, 42) so realisiert wird, daß sie im wesentlichen plan ist, man stellt vom Ursprung her, bevor noch das plastische Material sich zusammenzieht, den Verformungsbereich der Brücke(n) (8, 48), ein, um nach dem Schwinden ihre Planität zu dieser Wandung aufrecht zu erhalten.

6. Formteil erhalten durch Verwirklichung des Verfahrens nach einem der Ansprüche 1, 2 oder 5, dadurch **gekennzeichnet**, daß es in der allgemeinen Gestalt einer Platte vorliegt, die im mittigen Teil eine im wesentlichen plane Wandung (2) aus plastischem Material umfaßt, die am Umfang über Materialbrücken (8) mit einer Schicht (6) plastischen Materials verbunden ist, die gerade eine Bewehrung (4) umhüllt hat, die einen Rahmen um diese Wand (2) bildet, wobei diese Brücken (8), die ein einziges Bauteil mit dem Material dieser Wandung und dieser Schicht (6) bilden, wenigstens über eine Nut (12, 14, 12', 14') verfügen, die am Ort der Verbindung zwischen dieser Wand (2) und diesen Brücken und/oder diesen letzteren und dieser Hüllschicht (6) ausgespart ist.

7. Formteil nach Anspruch 6, dadurch **gekennzeichnet**, daß es zwei einander gegenüber liegende Flächen (22, 32) sowie zwei solche Nuten (12, 14, 12', 14') für jede Brücke umfaßt, wobei diese Nuten sich gegen eine Fläche sowie gegen die andere des Formteils öffnen.

8. Formteil erhalten durch Durchführung des Verfahrens nach einem der Ansprüche 1 oder 3 bis 5, dadurch **gekennzeichnet**, daß es in der allgemeinen Gestalt einer Platte vorliegt, die im Mittelteil eine Wandung (42) im wesentlichen aus plastischem Material umfaßt, die umfangsmäßig über Materialbrücken (48) mit einer Schicht (46) aus plastischem Material verbunden ist, welches eine Bewehrung (44) umhüllt, die einen Rahmen um diese Wandung (42) bildet, wobei jede Brücke, die aus einem Stück mit dem Material dieser Wand (42) und dieser Schicht (46) besteht, in der allgemeinen Ebene (43) der Wand (42) mit einer Winkelneigung (β) bezogen auf eine der Strahlungsrichtungen orientiert ist, die durch die Mitte dieser Wand gehen und die entsprechende Brücke kreuzen.

9. Formteil erhalten bei der Durchführung des Verfahrens nach einem der Ansprüche 1 oder 3 bis 5, dadurch **gekennzeichnet**, daß es in der allgemeinen Gestalt einer Platte vorliegt, die im Mittelteil eine im wesentliche plane Wandung (42) aus plastischem Material umfaßt, die umfangsmäßig über Materialbrücken (48) mit einer Schicht (46) aus plastischem Material verbunden ist, die gerade eine Bewehrung (44) umhüllt hat, die einen Rahmen um diese Wand (42) bildet, wobei diese Brücken (48) die ein einziges Teil mit dem Material der Wandung (42) sowie dieser Schicht (46) bilden, eine in der allgemeinen Ebene (43) im wesentlichen gekrümmte Form aufweisen.

10. Formteil nach einem der Ansprüche 6 bis 9, dadurch **gekennzeichnet**, daß diese Brücken aus Zungen bestehen, die durch Öffnungen (9, 49) getrennt und im wesentlichen regelmäßig die einen anschließend an die anderen über den Umfang der mittigen Wandung (2, 42) verteilt sind.

11. Verwendung des Formteils nach einem der Ansprüche 6 bis 10 als Trägerplatte für Käse, wie beispielsweise Emmentaler während der Reifung.
